# EUROPÄISCHE PATENTSCHRIFT

(11) **EP 2 642 496 B1**
(45) Veröffentlichungstag und Bekanntmachung des Hinweises auf die Patenterteilung: **21.10.2015**
(21) Anmeldenummer: 12192891.5
(22) Anmeldetag: 16.11.2012
(51) Int. Cl.: H01F 38/08

(54) **Widerstandsschweisstransformator**
Resistance welding transformer
Transformateur pour soudure à résistante

(30) Priorität: 23.03.2012 DE 202012101057 U
(43) Veröffentlichungstag der Anmeldung: 25.09.2013
(73) Patentinhaber: DALEX-Schweißmaschinen GmbH & Co. KG, 57537 Wissen/Sieg (DE)
(72) Erfinder: Brast, Gerd, 56459 Guckheim (DE)
(74) Vertreter: Stenger Watzke Ring

(56) Entgegenhaltungen:
- DE-A1-102009 016 798
- GB-A- 2 258 838
- JP-A- H1 085 947
- JP-A- H06 151 211
- US-A- 2 077 114

## Beschreibung

Die Erfindung betrifft einen Widerstandsschweißtransformator, eine Widerstandsschweißvorrichtung sowie ein Widerstandsschweißverfahren.

Widerstandsschweißen ist dem Grunde nach im Stand der Technik unter anderem durch Normierung in der DIN 1910 bekannt, und zwar als Widerstandspressschweißen gemäß Teil 5 der DIN 1910, und hier insbesondere als konduktives Widerstandspressschweißen, welches neben weiteren das Widerstandspunktschweißen, das Buckelschweißen, das Rollennahtschweißen, das Pressstumpfschweißen und das Abbrennstumpfschweißen umfasst.

Als Energiequelle für den Strom dient häufig ein Widerstandsschweißtransformator, an den wenigstens eine Schweißelektrode angeschlossen ist. Bei dem Widerstandsschweißtransformator handelt sich um ein elektrisches Bauelement, welches an die Erfordernisse des Widerstandsschweißens angepasst ausgebildet ist und in der Regel eine fest vorgegebene Schweißspannung sowie einen fest vorgegebenen Schweißstrom an die Schweißelektrode beziehungsweise die Schweißelektroden liefert.

Obgleich sich aus dem Stand der Technik vorbekannte Widerstandsschweißtransformatoren im Praxiseinsatz bewährt haben, besteht Verbesserungsbedarf, insbesondere mit Blick auf eine verbesserte Handhabung und Anwendung. Es ist deshalb die **Aufgabe** der Erfindung, einen Widerstandsschweißtransformator vorzuschlagen, der eine verbesserte Handhabung ermöglicht. Es soll ferner ein Widerstandsschweißverfahren vorgeschlagen werden.

Zur vorrichtungsseitigen **Lösung** dieser Aufgabe wird mit der Erfindung ein Widerstandsschweißtransformator nach Anspruch 1 vorgeschlagen, der eine erste als Hauptwicklung dienende Sekundärwicklung, die eine Hauptspannung erzeugt, und mindestens eine zweite als Hilfswicklung dienende Sekundärwicklung aufweist, die eine Hilfsspannung erzeugt, welche Hilfsspannung größer als die Hauptspannung ist, wobei die Hauptwicklung und die Hilfswicklung ausgleichsfrei parallelgeschaltet sind, und die Hilfswicklung eine größere Anzahl Windungen aufweist als die Hauptwicklung.

Der Widerstandsschweißtransformator der Erfindung weist in an sich bekannter Weise eine Primärwicklung auf, über die dem Widerstandsschweißtransformator selbst elektrische Energie zugeführt wird. Die Hauptwicklung ist eingerichtet, einen Hauptstrom bereitzustellen, und die Hilfswicklung ist eingerichtet, einen Hilfsstrom bereitzustellen. An den Schweißelektroden und folglich auch an der durch die Schweißelektroden kontaktierten Verbindungsstelle liegt die Schweißspannung an. Die Schweißelektroden beaufschlagen die Verbindungsstelle mit dem Schweißstrom. Natürlich können auch weitere Haupt- und Hilfswicklungen vorgesehen sein. Beispielsweise können anwendungsadaptiert Haupt- und/oder Hilfswicklung aktiviert oder deaktiviert werden. Mehrere Haupt- und/oder Hilfswicklungen können auch untereinander ausgleichsfrei parallelgeschaltet sein. Dies erweist sich insbesondere dann als vorteilhaft, wenn sämtliche Wicklungen für unterschiedliche Spannungen ausgelegt sind.

Ausgleichsfrei im Sinne der Erfindung meint, dass auf elektrischem Wege kein Energieaustausch zwischen der Hauptwicklung und der Hilfswicklung stattfindet. Ausgleichsfrei meint somit insbesondere, dass eine Rückwirkung in Form eines Stromflusses von der Hilfswicklung in die Hauptwicklung aufgrund der die Hauptspannung überschreitenden Hilfsspannung nicht stattfindet. Um dies zu erreichen, kann der Widerstandsschweißtransformator beispielsweise Dioden aufweisen. Es können aber auch andere Ausgleichsvermeidungsmittel vorgesehen sein, beispielsweise in Form elektronischer Bauteile, die einen Stromfluss von einer der beiden Sekundärwicklungen in die jeweils andere behindern. Derartige Ausgleichsvermeidungsmittel können beispielsweise durch elektronische Halbleiterbauelemente wie Dioden, Thyristoren, TRIAC's, GTO's aber auch Transistoren wie bipolare Hochstromtransistoren, Hochstrom-Feldeffekttransistoren oder dergleichen gebildet sein.

Mit dem Widerstandsschweißtransformator der Erfindung kann ein Widerstandsschweißen auch von solchen Verbindungsstellen erreicht werden, die einen hohen, sich zwischen den am Widerstandsschweißtransformator angeschlossenen Schweißelektroden ausbildenden Schweißwiderstand haben. Solche Verbindungsstellen können aufgrund ihres hohen Schweißwiderstands mit bekannten Widerstandsschweißtransformatoren nicht oder nur mit aufwändiger Vorbehandlung beziehungsweise unter besonderen Prozessbedingungen verschweißt werden.

Der Widerstandsschweißtransformator der Erfindung ermöglicht dies, indem er den Schweißwiderstand der Verbindungsstelle zunächst mit der hohen Hilfsspannung als Schweißspannung beaufschlagt, wodurch sich der Schweißwiderstand reduzieren kann. Hierfür stellt der erfindungsgemäße Widerstandsschweißtransformator eine Hilfsspannung zur Verfügung, deren Spannungswert größer als der Spannungswert der Hauptspannung ist. Anschließend - nach Erreichen eines für eine ordnungsgemäße Verschweißung hinreichend niedrigen Schweißwiderstands - wird von der Hilfsspannung als Schweißspannung auf die Hauptspannung als Schweißspannung gewechselt. Der Wechsel erfolgt automatisch ohne weitere Steuerungs- und Regelungsmittel allein durch den erfindungsgemäßen Widerstandsschweißtransformator. Aufgrund des reduzierten Schweißwiderstands kann nun der Hauptstrom der Hauptwicklung als Schweißstrom fließen, um eine ordnungsgemäße Widerstandsschweißung zu erreichen. An den Schweißelektroden liegt aufgrund der ausgleichsfreien Parallelschaltung immer die gerade höhere der beiden Spannungen, nämlich der Hauptspannung und der Hilfsspannung, an, sofern nicht gerade Spannungsgleichheit vorliegt. Ordnungsgemäß ist eine Verschweißung, wenn sie vorgegebene Parameter an der Verbindungsstelle erreicht. Ein solcher Parameter kann beispielsweise die Festigkeit, die Geometrie, elektrochemische Eigenschaften, Kombinationen hiervon oder dergleichen an oder im Bereich der Verbindungsstelle sein.

Um den automatischen Wechsel von der Hilfsspannung auf die Hauptspannung zu ermöglichen, sind die Hauptwicklung und die Hilfswicklung des erfindungsgemäßen Widerstandsschweißtransformators geeignet ausgelegt. So sind die Ausgestaltung der Hilfswicklung und deren Ankopplung an den durch die Primärwicklung erzeugten magnetischen Fluss derart, dass die Hilfswicklung einen hohen Innenwiderstand gegenüber einem Innenwiderstand der Hauptwicklung aufweist. Dadurch wird erreicht, dass bereits ein im Vergleich zum Hauptstrom kleiner Hilfsstrom zu einem Absinken des Spannungswerts der Hilfsspannung führt. Mit zunehmendem Hilfsstrom sinkt die Hilfsspannung weiter ab, bis sie bei einem vorgebbaren maximalen Hilfsstrom den Wert der Hauptspannung erreicht, sodass aufgrund der ausgleichfreien Parallelschaltung der Hauptstrom zu fließen beginnt. Bis zu diesem Zeitpunkt bildet der Hilfsstrom allein den Schweißstrom. Ab diesem Zeitpunkt addiert sich aufgrund der ausgleichsfreien Parallelschaltung der Hauptstrom zum Hilfsstrom als Schweißstrom hinzu, wodurch der für die ordnungsgemäße Verschweißung erforderliche Wert für den Schweißstrom erreicht werden kann. Da in der Regel der Hauptstrom wesentlich größer als der Hilfsstrom ist und die Schweißspannung während des ordnungsgemäßen Verschweißens möglichst konstant sein soll, ist der Innenwiderstand der Hauptwicklung entsprechend klein gegenüber dem Innenwiderstand der Hilfswicklung. Diese Ausgestaltung des erfindungsgemäßen Widerstandsschweißtransformators ermöglicht es, dass automatisch zwischen der Hilfs- und der Hauptspannung gewechselt werden kann, und zwar kann der automatische Wechsel in Abhängigkeit des Schweißwiderstands erfolgen. Dadurch wird an der Verbindungsstelle immer automatisch die optimale Spannung als Schweißspannung bereitgestellt.

Der Hilfsstrom kann die Verbindungsstelle für die eigentliche Beaufschlagung mit dem Hauptstrom als Schweißstrom zum Zwecke des Widerstandsschweißens vorbereiten. In der Regel wird der Hilfsstrom - anders als der Hauptstrom - noch keine ordnungsgemäße Verschweißung bewirken können. Durch die Hilfsspannung kann aber der hohe Schweißwiderstand der Verbindungsstelle überwunden werden, sodass die Verbindungsstelle für ein ordnungsgemäßes Verschweißen durch Einwirkung eines den Hauptstrom umfassenden Schweißstromes vorbereitet ist.

Die erfindungsgemäße Ausgestaltung des Widerstandsschweißtransformators erlaubt es somit, ohne zusätzlichen Aufwand, beispielsweise in Form von Steuerungsmitteln, eine zuverlässige Schweißung der Verbindungsstelle auch bei einem ungünstigen Schweißwiderstand zu erreichen. Dabei wird der Übergang von der Hilfsspannung auf die Hauptspannung als Schweißspannung von den elektrischen Eigenschaften der Verbindungsstelle selbst bestimmt, sodass automatisch immer die für eine ordnungsgemäße Verschweißung optimalere Spannung an der Verbindungsstelle ansteht. Dies ermöglicht zugleich automatisch eine zuverlässige und sichere Verschweißung durch Widerstandsschweißen. Mit der Erfindung kann demnach erreicht werden, automatisch für jede Verbindungsstelle die individuellen, optimalen Eigenschaften für die Verschweißung bereitzustellen. Auch bei Variation der Bedingungen der zu verschweißenden Verbindungsstellen kann folglich eine zuverlässigere Qualität der Verschweißung erreicht werden.

Mit dem Widerstandsschweißtransformator der Erfindung können somit zum Beispiel auch dann Werkstücke aus elektrisch leitfähigen Werkstoffen wie Metallen vorzugsweise in einem einzigen Arbeitsgang direkt verschweißt werden, wenn sie aufgrund teilweise schlecht leitender oder isolierender Schichten, insbesondere Oberflächenschichten wie einer Ölschicht, einer verfahrensbedingten Schicht wie einer Kleberschicht, einer galvanischen Schicht, einer Oxidschicht, aber auch einer Verschmutzung oder dergleichen mittels bekanntem Widerstandsschweißen nicht oder nur unter aufwändiger Vorbehandlung, besonderer Prozessbedingungen oder dergleichen verschweißt werden können.

Darüber hinaus bringt die Erfindung eine weitere Verbesserung gegenüber dem Stand der Technik. So ist es nämlich ein Problem beim Widerstandsschweißen, dass die Schweißelektroden mit zunehmender Anzahl von durchgeführten Schweißungen einem Verschleiß unterliegen und darüber hinaus auch während des bestimmungsgemäßen Betriebs verschmutzt werden können. Dadurch kann die Qualität der Schweißverbindung beeinträchtigt sein. Beim Widerstandspunktschweißen führt dieses Problem zu abweichenden, insbesondere reduzierten Punktdurchmessern. Mit der Erfindung kann die mit solchen Verschmutzungen der Schweißelektroden einhergehende Erhöhung des Schweißwiderstands mit großer Zyklendauer überwunden werden. Dies erlaubt eine höhere Standzeit der Schweißelektroden, sodass aufwändige Wartungsintervalle reduziert werden können. Ferner erhöht dies auch die Zuverlässigkeit der ordnungsgemäßen Widerstandsschweißung beim bestimmungsgemäßen Betrieb.

Der Widerstandsschweißtransformator der Erfindung koppelt nicht nur die Primärwicklung über ein magnetisches Wechselfeld mit der Hauptwicklung, sondern er koppelt darüber hinaus auch die Primärwicklung über ein magnetisches Wechselfeld mit der Hilfswicklung. Die magnetischen Flüsse durch die Hauptwicklung und die Hilfswicklung können gleich, insbesondere auch identisch, sein, aber auch voneinander abweichen. Ein abweichender magnetischer Fluss in der Hilfswicklung kann beispielsweise durch einen separaten Jochabschnitt eines magnetisch permeablen Körpers gebildet sein, der die magnetische Kopplung zwischen der Primärwicklung auf der einen Seite und der Hauptwicklung sowie der Hilfswicklung auf der anderen Seite herstellt. Der Widerstandsschweißtransformator kann für seine Wicklungen Anschlussklemmen aufweisen, sodass ein einfacher Anschluss an die Wicklungen erfolgen kann. Darüber hinaus kann der Widerstandsschweißtransformator ein Gehäuse aufweisen, welches Anschlüsse für die Primärwicklung sowie Anschlüsse für die Schweißelektroden bereitstellt.

An die Primärwicklung ist üblicherweise eine Primärspannung einer Energiequelle angeschlossen, die beispielsweise eine Wechselspannung eines öffentlichen Energieversorgungsnetzes sein kann. Die Primärspannung kann beispielsweise einige hundert Volt (V), zum Beispiel 230 V, 400 V oder auch darüber wie zum Beispiel 1 Kilovolt (kV) bei 50 Hertz (Hz) oder auch bei 60 Hz betragen. Je nach Verfügbarkeit und erforderlicher Leistung können auch kleinere oder größere elektrische Spannungen für den Anschluss an die Primärwicklung vorgesehen sein. Auch die Frequenz kann variieren. Insbesondere kann vorgesehen sein, dass die Primärwicklung an einen Umrichter als Energiequelle für den Widerstandsschweißtransformator angeschlossen ist, der eine Wechselspannung mit mittlerer oder hoher Frequenz erzeugt. Der Frequenzbereich kann hierfür beispielsweise ausgehend von einigen 100 Hz über mehreren Kilohertz (kHz) bis hin zu 150 kHz reichen.

Als besonders vorteilhaft erweist es sich, wenn die Hauptspannung 3 bis 16 V, bevorzugt, 6 bis 12 V und besonders bevorzugt 8 bis 10 V beträgt. Bei diesen niedrigen Hauptspannungen kann eine sehr gute Prozessfunktionalität erreicht werden. Darüber hinaus kann mit der niedrigen Hauptspannung eine einfache Isolation auch sperriger Leiter ermöglicht werden, die aufgrund des hohen Hauptstromes erforderlich sein können. Dies ist unter anderem vorteilhaft für den Aufbau der Wicklungen des Widerstandsschweißtransformators. Für viele Anwendungen, beispielsweise bei der Verarbeitung von Blechen, hat sich eine Hauptspannung im Bereich von etwa 6 bis 12 V als zweckmäßig erwiesen. Ganz besonders vorteilhaft erweist sich dabei eine Spannung von etwa 9 V, die für eine Vielzahl von Anwendungen geeignet ist, sodass mit einer einzigen Ausführung eines erfindungsgemäßen Widerstandsschweißtransformators eine Vielzahl von Verbindungsstellen unterschiedlicher Werkstücke mittels der Erfindung verschweißt werden können.

Um Vorteile bezüglich der elektrischen Sicherheit nutzen zu können, schlägt die Erfindung vor, dass die Hilfsspannung 50 V oder weniger, vorzugsweise 10 bis 50 V, bevorzugt 25 bis 50 V und besonders bevorzugt 45 bis 50 V, insbesondere 48 V beträgt. Im Spannungsbereich von 10 bis 50 V für die Hilfsspannung kann die überwiegende Mehrheit der Anwendungen zuverlässig ausgeführt werden. Die Zuverlässigkeit kann weiter erhöht werden, wenn der Spannungsbereich für die Hilfsspannung von etwa 25 bis etwa 50 V reicht. Eine besonders bevorzugte Spannung beträgt etwa 48 V. Diese Spannung ist in vielen Standardanwendungen verfügbar, sodass bezüglich der Realisierung des Widerstandsschweißtransformators auf vorhandene Bauteile zurückgegriffen werden kann. Zugleich gilt sie noch als Kleinspannung in der Normung (DIN VDE 0100), sodass reduzierte Anforderungen hinsichtlich der elektrischen Sicherheit zu berücksichtigen sind.

Die angegebenen Spannungswerte beziehen sich auf Effektivwerte bei Wechselspannungen beziehungsweise Gleichspannungswerte.

Eine Weiterbildung der Erfindung sieht vor, dass die Parallelschaltung der Hauptwicklung und der Hilfswicklung einen Gleichrichter aufweist. Der Gleichrichter dient nicht nur der Gleichrichtung der von der Hauptwicklung beziehungsweise der Hilfswicklung gelieferten Wechselspannungen, sondern er dient zugleich auch dazu, die Spannungen ausgleichsfrei parallelzuschalten, indem ein Energiefluss zwischen der Hauptwicklung und der Hilfswicklung im elektrischen Teil des Widerstandsschweißtransformators verhindert wird. Der Gleichrichter kann beispielsweise durch Halbleiterdioden gebildet sein. Darüber hinaus kommen auch gesteuerte Halbleiter wie Thyristoren, TRIAC's, Transistoren, insbesondere Feldeffekttransistoren sowie Kombinationen solcher Bauelemente oder dergleichen in Betracht. Durch die Gleichrichtung wird eine Gleichspannung bereitgestellt, die pulsierend sein kann. Darüber hinaus besteht natürlich die Möglichkeit, die Gleichspannung mittels Glättungsmittel in Form von elektronischen Energiespeichern wie Induktivitäten, Kondensatoren und/oder dergleichen zu glätten.

Eine Ausgestaltung der Erfindung sieht vor, dass die Hauptwicklung und die Hilfswicklung unterschiedliche Windungszahlen aufweisen. Insbesondere wenn beide Wicklungen vom gleichen magnetischen Fluss durchflutet werden, kann hierdurch auf einfache Weise eine von der Hauptspannung abweichende Hilfsspannung erreicht werden. Zur Erzeugung einer die Hauptspannung übersteigenden Hilfsspannung ist vorgesehen, dass die Windungszahl der Hilfswicklung größer ist als die Windungszahl der Hauptwicklung. Besonders vorteilhaft erweist sich dies dann, wenn die Hauptwicklung einen Hauptstrom bereitstellt, dessen Wert wesentlich größer ist, als der von der Hilfswicklung bereitstellbare Hilfsstrom. In Abhängigkeit der Stromführung der Wicklungen können Leiterquerschnitte gewählt werden, sodass die Hilfswicklung einen geringeren Leiterquerschnitt benötigt als die Hauptwicklung. Dadurch können Wicklungsräume des Widerstandsschweißtransformators für die jeweilige Wicklung optimiert werden.

Der Widerstandsschweißtransformator weist vorteilhaft einen magnetisch permeablen Körper auf. Dieser kann eine Unterbrechung, insbesondere einen Luftspalt aufweisen. Mit dem magnetisch permeablen Körper kann der magnetische Fluss zwischen den Wicklungen mit einem hohen Wirkungsgrad geführt werden, sodass ein hoher Wirkungsgrad für den Widerstandsschweißtransformator im bestimmungsgemäßen Betrieb des Widerstandsschweißens erreicht werden kann. Der magnetisch permeable Körper kann in Form eines Jochs ausgebildet sein, auf dem die Primärwicklung, die Hauptwicklung sowie die Hilfswicklung angeordnet sein können. Natürlich kann der magnetisch permeable Körper auch für jede der vorgenannten Wicklungen einen eigenen Jochabschnitt aufweisen. Der magnetisch permeable Körper kann eine Unterbrechung, beispielsweise in Form eines Luftspalts aufweisen, sodass der magnetische Fluss in den einzelnen Wicklungen bedarfsgerecht eingestellt werden kann. Neben der Windungszahl kann hiermit auch ein Einstellen der Hauptspannung und/oder Hilfsspannung erreicht werden. Natürlich können diese Einstellmöglichkeiten auch miteinander kombiniert sein. Diese Ausgestaltung erlaubt es ferner, durch Verändern der Unterbrechung beziehungsweise des Luftspalts Einstellungen hinsichtlich der Hilfsspannung und/oder Hauptspannung sowie der bereitstellbaren Leistung vornehmen zu können. Hierfür können weitere magnetisch permeable Körper vorgesehen sein, die bedarfsweise in die Unterbrechung beziehungsweise in den Luftspalt eingefahren werden können.

Der magnetisch permeable Körper kann bei niedrigen Frequenzen, beispielsweise im Bereich von 45 Hz bis 65 Hz, durch vorzugsweise gegenüber einander isolierte Eisenbleche, beispielsweise in Form eines Blechpakets, gebildet sein. Bei höheren Frequenzen kann anstelle von Eisenblechen ein Schnittbandkern, ein Ringkern, ein gesinterter Ferritwerkstoff oder dergleichen vorgesehen sein, der eine geeignete magnetische Permeabilität aufweist. Bei Frequenzen im Bereich von einigen hundert Hertz bis in den unteren Kilohertzbereich können bevorzugt Schnittbandkerne oder auch Ringkerne als magnetisch permeable Körper eingesetzt werden. Bei Frequenzen im Bereich von einigen kHz und darüber können hierfür magnetisch permeable Körper aus vorzugsweise magnetisch permeablen Ferritwerkstoffen eingesetzt werden.

Besonders vorteilhaft erweist es sich, wenn der magnetisch permeable Körper einen unterschiedlichen magnetischen Fluss für die Hauptwicklung und die Hilfswicklung bereitstellt. Dies ermöglicht es, die durch die beiden Wicklungen bereitstellbare Leistung und damit den maximal lieferbaren Strom einer jeweiligen Wicklung einzustellen. Insbesondere kann hierdurch erreicht werden, dass ein Einstellen des Wechselns von der Hilfsspannung auf die Hauptspannung und umgekehrt eingestellt werden kann. Der magnetische Fluss insgesamt wird durch die Primärwicklung des Widerstandstransformators im magnetisch permeablen Körper bereitgestellt.

Eine vorteilhafte Weiterbildung sieht vor, dass der Widerstandsschweißtransformator als Dreiphasenschweißtransformator ausgebildet ist. Darüber hinaus können auch die Hilfswicklung und die Hauptwicklung dreiphasig ausgelegt sein. Dies ist insbesondere im Bereich großer Leistungen und Schweißströme zweckmäßig. Gegebenenfalls sind entsprechende Anpassungen vorzunehmen, so beispielsweise bei Nutzung eines Gleichrichters, der entsprechend für dreiphasigen Betrieb vorzusehen ist.

Nach einer weiteren Ausgestaltung der Erfindung können die Hauptwicklung und die Hilfswicklung einstückig als Reihenschaltung mit Anzapfung ausgebildet sein. Diese Ausgestaltung ermöglicht eine einfache Verschaltung innerhalb des Widerstandsschweißtransformators.

Darüber hinaus kann vorgesehen sein, dass die Hauptwicklung und/oder die Hilfswicklung eine Anzapfung aufweisen. Vorzugsweise handelt es sich dabei um eine Mittelanzapfung, sodass eine Zweiweggleichrichtung ermöglicht wird. Hierdurch kann eine hohe Leistungsfähigkeit des Widerstandsschweißtransformators erreicht werden. Die Anzapfung kann durch einen elektrischen Kontakt mit der entsprechenden Wicklung hergestellt werden, wobei der Kontakt an der gewünschten Stelle der Wicklung elektrisch kontaktierend ausgebildet ist.

Mit der Erfindung wird ferner eine Widerstandsschweißvorrichtung mit Schweißelektroden und einem Widerstandsschweißtransformator der Erfindung vorgeschlagen, wobei die Schweißelektroden an den Widerstandsschweißtransformator angeschlossen sind. Dadurch wird eine kompakte Widerstandsschweißvorrichtung bereitgestellt, mit der - automatisch gesteuert - zwischen einer Hilfsspannung und einer Hauptspannung gewechselt werden kann. Insbesondere zeichnet sich die erfindungsgemäße Widerstandsschweißvorrichtung dadurch aus, dass sie keine aufwändigen Steuerungen und Regelungen benötigt, um die gewünschte Funktion zu realisieren. Darüber hinaus kann die Vorrichtung durch einfache Maßnahmen am Widerstandsschweißtransformator bedarfsgerecht eingestellt werden, beispielsweise hinsichtlich der Hauptspannung, der Hilfsspannung, des maximalen Hilfsstromes, des Hauptstromes und/oder dergleichen. Das Anschließen kann mittels geeigneter Leitungen, Klemmen, Verbindungstechniken wie Steckkontakten und Steckhülsen und/oder dergleichen erfolgen.

Weiterhin wird mit der Erfindung zur verfahrensseitigen **Lösung** der vorstehenden Aufgabe ein Widerstandsschweißverfahren vorgeschlagen, bei dem mittels eines Widerstandsschweißtransformators der Erfindung zwischen einer Hauptspannung und einer Hilfsspannung in Abhängigkeit der Änderung eines sich zwischen Schweißelektroden ausbildenden Schweißwiderstandes gewechselt wird. Das Wechseln zwischen Hauptspannung und Hilfsspannung kann vorteilhaft ein an die jeweiligen Erfordernisse der zu schweißenden Verbindungsstelle angepasstes Wechseln zwischen der Hauptspannung und der Hilfsspannung sein. Es kann ferner ein hin und her Wechseln umfassen. Die Hauptspannung beziehungsweise die Hilfsspannung liegen an den Schweißelektroden an, die ihrerseits das zu schweißende Werkstück beziehungsweise die zu schweißenden Werkstücke vorzugsweise im Bereich der Verbindungsstelle kontaktieren. Auf diese Weise kann mit der Erfindung erreicht werden, dass der für eine ordnungsgemäße Verschweißung erforderliche Strom als Schweißstrom erreicht wird, sodass eine zuverlässige Widerstandsverschweißung gewährleistet werden kann. Mit der erfindungsgemäßen Verfahrensführung kann der Schweißwiderstand einer Verbindungsstelle, der aufgrund seines Widerstandswertes ein ordnungsgemäßes Verschweißen mittels Widerstandsschweißen behindern würde, automatisch auf einen Widerstandswert gesenkt werden, sodass ein ordnungsgemäßes Verschweißen mittels Widerstandsschweißen erreicht werden kann, insbesondere wenn zum Beispiel der erhöhte Widerstand durch eine Isolationsschicht wie Lack, Schmutz, Kleber, Öle, einer galvanischen Schicht, Kombinationen hiervon oder dergleichen bedingt ist.

Mit dem Verfahren der Erfindung kann eine Widerstandsschweißung zum Beispiel in zwei Schritten durchgeführt werden. In einem ersten Schritt wird die Verbindungsstelle zunächst mit einer Hilfsspannung beaufschlagt, deren Spannungswert größer als eine Hauptspannung ist. Dadurch kann der Widerstandswert des Schweißwiderstands reduziert werden, sodass ein ordnungsgemäßes Verschweißen mittels Widerstandsschweißen durchgeführt werden kann. In einem zweiten Schritt kann sodann mittels Beaufschlagen der Verbindungsstelle mit der Hauptspannung der eigentliche Schweißvorgang durch einen den Hauptstrom umfassenden Schweißstrom durchgeführt werden, der die ordnungsgemäße Verschweißung zum Ergebnis hat.

Das Wechseln erfolgt automatisch in Abhängigkeit einer Änderung des Widerstandswertes des Schweißwiderstands. Durch entsprechende Dimensionierung des erfindungsgemäßen Widerstandsschweißtransformators kann ein automatisches Wechseln erreicht werden. Hierdurch können ergänzende Bauelemente, mit denen das Wechseln gesteuert beziehungsweise geregelt werden könnte, vermieden werden. Durch die Verwendung des erfindungsgemäßen Widerstandsschweißtransformators sind keine weiteren Mittel für die Verfahrensführung erforderlich. Durch entsprechende Maßnahmen im Bereich der magnetischen Kopplung zwischen der Primärwicklung einerseits sowie der Hauptwicklung und der Hilfswicklung andererseits können Parameter für das automatische Wechseln vorgegeben werden. Vorzugsweise können diese Parameter einstellbar sein. Durch die Verwendung des erfindungsgemäßen Widerstandsschweißtransformators im erfindungsgemäßen Verfahren stellen sich auch mit dem erfindungsgemäßen Widerstandsschweißtransformator verbundenen Vorteile ein, die oben bereits ausführlich gewürdigt sind.

Es erweist sich als vorteilhaft, dass von der Hauptspannung auf die Hilfsspannung gewechselt werden kann, wenn der für die ordnungsgemäße Verschweißung erforderliche Schweißstrom nicht erreicht wird. Mit dem erfindungsgemäßen Verfahren können folglich auch Widerstandsschweißungen ausgeführt werden, bei denen während des Schweißvorgangs Erhöhungen des Schweißwiderstands auftreten. In einem solchen Fall wird von der Hauptspannung als Schweißspannung auf die Hilfsspannung gewechselt, bis der Schweißwiderstand seinen Widerstandswert reduziert. Danach kann der Schweißvorgang mit der Hauptspannung als Schweißspannung fortgeführt werden. Dieses Vorgehen kann beliebig oft wiederholt werden, beispielsweise in Form eines hin und her Wechselns. Der erfindungsgemäße Widerstandsschweißtransformator erlaubt hierfür eine einfache automatisierte und im Wesentlichen verschleißfreie Verfahrensführung, ohne dass ergänzend steuernd oder regelnd eingegriffen werden müsste.

Besonders vorteilhaft erweist es sich, wenn bei Erreichen eines maximalen Hilfsstromes der Hilfswicklung von der Hilfsspannung auf die Hauptspannung gewechselt wird. Dies ermöglicht es, nach Erreichen eines vorgebbaren Schweißwiderstands durch Wechsel auf die Hauptspannung den vorgesehenen Schweißvorgang ordnungsgemäß durchzuführen. Der maximale Hilfsstrom kann - ebenso wie natürlich auch der Hauptstrom - in vorgebbarer Weise einstellbar sein. Maßnahmen wie Vorbereiten oder Nacharbeiten der zu verschweißenden Verbindungsstelle und dergleichen können eingespart werden.

Es kann ferner vorgesehen sein, dass das Wechseln in einem Zeitbereich, vorzugsweise kontinuierlich erfolgt. Hierdurch können Vorteile bezüglich der elektromagnetischen Verträglichkeit erreicht werden, beispielsweise indem Funkstörungen reduziert werden können. Darüber hinaus können Belastungen der elektrischen Bauteile reduziert werden. So kann beispielsweise vorgesehen sein, dass das Wechseln im Millisekundenbereich mit vorgebbaren Spannungs- und/oder Stromsteilheiten erfolgt. Gegebenenfalls können hierfür ergänzende Bauelemente vorgesehen sein.

Eine vorteilhafte Weiterbildung sieht vor, dass die Hauptspannung und/oder die Hilfsspannung gleichgerichtet werden. Durch die Gleichrichtung kann nicht nur eine Entkopplung zum Zwecke der ausgleichsfreien Parallelschaltung der Hauptwicklung und der Hilfswicklung erreicht werden, sondern es kann darüber hinaus auch eine vorgebbare Schweißcharakteristik erreicht werden. Für das Gleichrichten können die obengenannten Mittel vorgesehen sein, die je nach Bedarf auch zu einer oder mehrerer Gleichrichtereinheiten zusammengefasst sein können.

Weitere Vorteile und Merkmale sind der folgenden Beschreibung von Ausführungsbeispielen anhand von beigefügten Figuren zu entnehmen Die Ausführungsbeispiele dienen lediglich der weiteren Erläuterung der Erfindung und sollen nicht die Erfindung beschränkend verstanden werden.

Es zeigen:
- Fig. 1: ein schematisches Prinzipschaltbild für eine Widerstandsschweißvorrichtung mit einem Widerstandsschweißtransformator gemäß der Erfindung, die an eine zu verschweißende Verbindungsstelle mittels Schweißelektroden angeschlossen ist,
- Fig. 2: ein Zeitdiagramm, in welchem mittels eines Graphen die zeitliche Änderung des Schweißwiderstandes der zu schweißenden Verbindungsstelle in Fig. 1 dargestellt ist,
- Fig. 3: ein Zeitdiagramm mit der gleichen Zeitbasis wie Fig. 2, in welchem Diagramm der zeitliche Verlauf der Hilfsspannung mittels eines Graphen dargestellt ist,
- Fig. 4: ein Zeitdiagramm mit der Zeitbasis wie Fig. 2, in welchem Diagramm der zeitliche Verlauf der Hauptspannung mittels eines Graphen dargestellt ist,
- Fig. 5: ein Diagramm mit der gleichen Zeitbasis wie Fig. 2, in welchem Diagramm mittels eines Graphen der zeitliche Verlauf der Schweißspannung dargestellt ist,
- Fig. 6: ein Diagramm mit einer im Wesentlichen gleichen Zeitbasis wie Fig. 2, in welchem Diagramm mittels eines Graphen der zeitliche Verlauf des Hilfsstromes dargestellt ist,
- Fig. 7: ein Diagramm mit im Wesentlicher gleicher Zeitbasis wie Fig. 2, in welchem Diagramm mittels eines Graphen der zeitliche Verlauf des Schweißstromes dargestellt ist,
- Fig. 8: ein Zeitdiagramm, in welchem mittels zweier Graphen der zeitliche Verlauf der Schweißspannung und des Schweißstromes zu Beginn eines Schweißvorgangs mittels erfindungsgemäßem Widerstandspunktschweißen an einem lackierten Blech dargestellt ist und
- Fig. 9: ein Diagramm, in welchem mittels zweier Graphen ein Schweißpunktdurchmesser beim Widerstandspunktschweißen über der Anzahl der Schweißungen dargestellt ist, wobei ein Graph den Punktschweißdurchmesser beim Widerstandspunktschweißen mit einer Vorrichtung des Stands der Technik und ein weiterer Graph den Punktdurchmesser beim Widerstandspunktschweißen mit einer Widerstandsschweißvorrichtung der Erfindung darstellt.

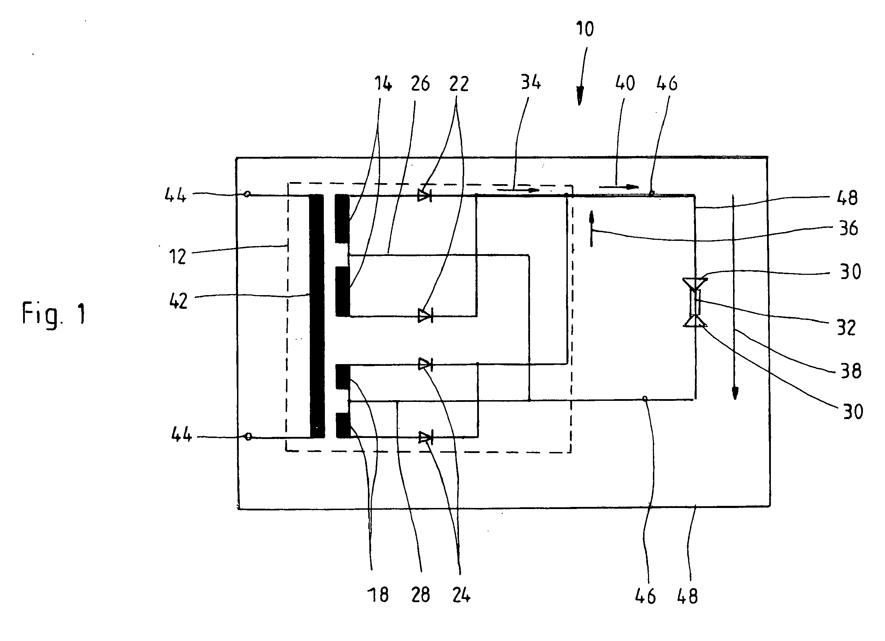

Fig. 1 zeigt in Form eines schematischen elektronischen Prinzipschaltbildes eine Widerstandsschweißvorrichtung 10 mit zwei Schweißelektroden 30 und einem Widerstandsschweißtransformator 12 gemäß der Erfindung. Der Widerstandsschweißtransformator 12 weist Anschlüsse 46 auf, an die die Schweißelektroden 30 angeschlossen sind.

Zwischen den Schweißelektroden 30 ist eine schematisch vereinfacht dargestellte, mittels Widerstandsschweißen zu verbindende Verbindungsstelle angeordnet, sodass sich zwischen den Schweißelektroden 30 ein elektrischer Schweißwiderstand 32 ausbildet. Die Verbindungsstelle kann zwischen zwei elektrisch leitfähigen Werkstücken ausgebildet sein, die an dieser Stelle miteinander verschweißt werden sollen, oder es kann auch eine Verbindungsstelle innerhalb eines solchen Werkstückes sein.

Es ist der besseren Übersicht wegen nicht dargestellt, dass die Schweißelektroden 30 bedarfsweise mit einer Kraft beaufschlagt werden können, sodass die Verbindungsstelle während des Schweißvorganges druckbeaufschlagt ist. Die Schweißelektroden 30 selbst können an die zu schaffende Schweißverbindung angepasst ausgebildet sein. Sie bestehen üblicherweise aus einem elektrisch gut leitfähigen Werkstoff und können bei Bedarf eine Kühlung aufweisen. Der Anschluss der Schweißelektroden 30 an die Anschlüsse 46 kann mittels geeigneter elektrischer Leitungen 48 vorgesehen sein, die einen Schweißstrom 40 während des Schweißvorganges mit möglichst geringem Verlust führen. Die Leitungen 48 können beispielsweise aus Kupfer, Aluminium oder dergleichen gebildet sein. Bei einem Schweißstrom 40 in Form eines Wechselstroms kann die Leitung auch in Form einer Litze aus isolierten Einzeldrähten, insbesondere einer Hochfrequenzlitze, als Hohlleiter oder dergleichen gebildet sein.

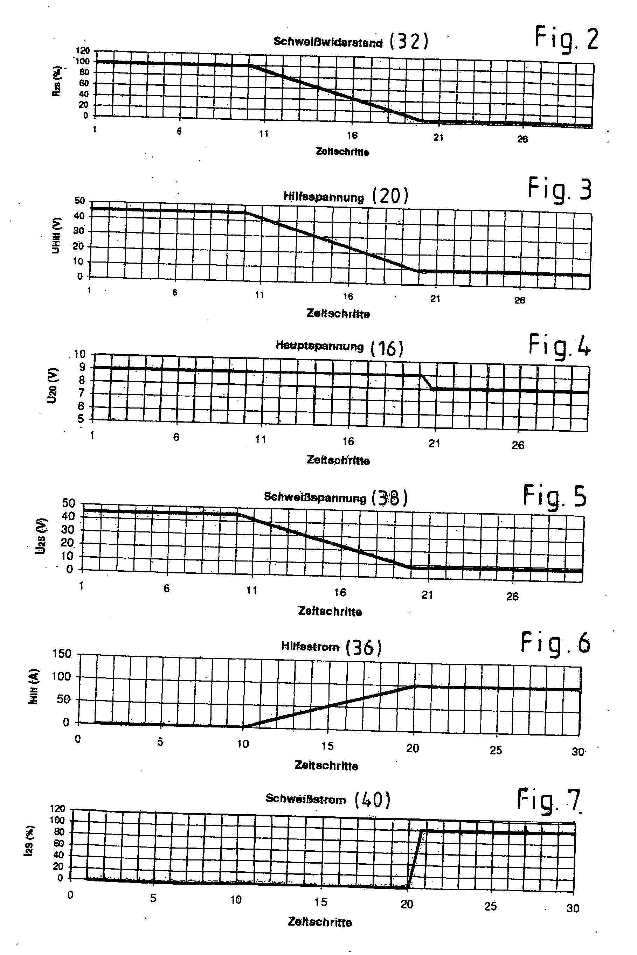

Der Widerstandsschweißtransformator 12 weist neben einer Primärwicklung 42 eine eine Hauptspannung 16 (Fig. 4) erzeugende Hauptwicklung 14 und eine eine Hilfsspannung 20 (Fig. 3) erzeugende Hilfswicklung 18 auf. Es ist der besseren Übersicht wegen nicht dargestellt, dass die Primärwicklung 42, die Hauptwicklung 14 und die Hilfswicklung 18 an einem magnetisch permeablen Körper angeordnet sind und von diesem durchragt sind. Der Widerstandsschweißtransformator 12 ist in diesem Ausführungsbeispiel für eine Frequenzbeaufschlagung bei etwa 1 kHz ausgelegt, in welchem Fall der magnetisch permeable Körper in Form eines Schnittbandkerns ausgebildet ist. Alternativ kann auch ein Ringkern vorgesehen sein. Dadurch wird erreicht, dass der von der Primärwicklung 42 erzeugte magnetische Fluss weitgehend verlustfrei zur Hauptwicklung 14 und zur Hilfswicklung 18 geführt werden kann. Bei einer höheren Frequenz, beispielsweise in einem Bereich von 5 kHz bis 20 kHz oder auch darüber, kann vorgesehen sein, dass der magnetisch permeable Körper aus einem Ferritwerkstoff gebildet ist.

Die Primärwicklung 42 weist zwei Anschlüsse 44 auf, die zum Anschluss an eine nicht dargestellte Energiequelle zwecks Energieversorgung dienen. In der bevorzugten Ausgestaltung als Mittelfrequenztransformator ist die Energiequelle durch einen Umrichter gebildet, der eine Wechselspannung mit einer Frequenz von etwa 20 kHz erzeugt. Natürlich kann der Widerstandsschweißtransformator 12 auch für einen Direktanschluss an ein öffentliches Energieversorgungsnetz ausgelegt sein, in welchem Fall die Frequenz der an die Primärwicklung 42 aufzuschaltenden Spannung bei 50 oder auch bei 60 Hz liegt. Gegebenenfalls kann der Widerstandsschweißtransformator 12 in einem solchen Fall anstelle des Schnittbandkerns oder eines Ferrits einen entsprechend angepassten magnetisch permeablen Körper, beispielsweise in Form eines Eisenblechpakets oder dergleichen, aufweisen.

Sowohl die Hauptwicklung 14 als auch die Hilfswicklung 18 sind vorzugsweise mit einer Anzapfung 26, 28 als Mittelanzapfung versehen. Die Anzapfungen 26, 28 sind jeweils mittig bezüglich der der Windungszahlen sowohl der Hauptwicklung 14 als auch der Hilfswicklung 18 vorgesehen und gemeinsam mit einem der beiden Anschlüsse 46 elektrisch leitend verbunden. Durch die Anzapfungen 26, 28 sind sowohl die Hauptwicklung 14 als auch die Hilfswicklung 18 in zwei Abschnitte unterteilt, welche Abschnitte betragsmäßig eine gleiche elektrische Spannung bereitstellen, die jedoch bezüglich der Phasenlage entgegengesetzt gepolt sind. Es ist dabei bevorzugt, dass beide Wicklungen 14, 18 im Wesentlichen vom gleichen magnetischen Fluss durchflutet sind. Ferner ist die Windungszahl der Hilfswicklung 18 größer als die Windungszahl der Hauptwicklung 14. Dadurch erzeugt die Hilfswicklung 18 eine größere elektrische Spannung als die Hauptwicklung 14.

Die Wicklungsenden sowohl der Hauptwicklung 14 als auch der Hilfswicklung 18 sind jeweils an Anoden von Dioden 22, 24 in Form von Halbleiterdioden angeschlossen. Die Kathoden aller Dioden 22, 24 sind elektrisch leitend mit dem anderen der beiden Anschlüsse 46 verbunden. Diese Verschaltung bewirkt sowohl für die Hauptwicklung 14 als auch für die Hilfswicklung 18 eine Zweiweggleichrichtung, wodurch der Widerstandsschweißtransformator 12 hinsichtlich seiner Leistungsfähigkeit besser genutzt werden kann. Die Dioden 22, 24, die als Gleichrichter dienen, können beispielsweise paarweise Gleichrichtereinheiten bilden. Hierdurch können Montage und Wartung vereinfacht werden. Die der Hauptwicklung 14 zugeordneten Dioden 22 stellen einen Hauptstrom 34 bei einer Hauptspannung 16 zur Verfügung, wie sie beispielhaft anhand von Fig. 4 dargestellt ist. Entsprechend stellen die der Hilfswicklung 18 zugeordneten Dioden 24 einen Hilfsstrom 36 bei einer Hilfsspannung 20 bereit, wie sie anhand von Fig. 3 beispielhaft dargestellt ist.

In der vorliegenden Ausgestaltung ist vorgesehen, dass sich während der Durchführung des ordnungsgemäßen Verschweißens der Hilfsstrom 36 zum Hauptstrom 34 addiert, der den Schweißelektroden 30 zugeführt wird. Das heißt, der Wert des Schweißstromes 40, der durch den Schweißwiderstand 32 der Verbindungsstelle strömt, ist aus den Werten des Hilfsstromes 36 und des Hauptstromes 34 gebildet. Natürlich kann auch vorgesehen sein, dass sich die Werte des Hilfsstromes 36 und des Hauptstromes 34 nicht oder nur teilweise addieren, je nach Ausbildung einer Verschaltung des Widerstandsschweißtransformators 12. Der Stromkreis schließt sich von den Schweißelektroden 30 über den weiteren Anschluss 46 und die Anzapfungen 26, 28.

In der vorliegenden Ausgestaltung sorgen die Dioden 22, 24 ferner dafür, dass die Hauptspannung 16 und die Hilfsspannung 20 ausgleichsfrei parallelgeschaltet sind. Da gemäß der Erfindung die Hilfsspannung 20 größer als die Hauptspannung 16 ist, bedeutet dies, dass von der Hilfswicklung 18 kein Strom in die Hauptwicklung 14 aufgrund der Spannungsdifferenz zwischen diesen beiden Wicklungen fließen kann. Solange die Hilfsspannung 20 größer als die Hauptspannung 16 ist, sind die Dioden 22 in Sperrrichtung spannungsbeaufschlagt. Dadurch wird ein Kurzschlusseffekt innerhalb des Widerstandsschweißtransformators 12 vermieden.

Zugleich ist die magnetische Kopplung der Hilfswicklung 18 derart, dass die Hilfswicklung 18 eine Hilfsspannungsquelle ausbildet, die im Vergleich zu einer durch die Hauptwicklung 14 gebildeten Hauptspannungsquelle einen hohen Innenwiderstand aufweist. Erreicht werden kann dies beispielsweise dadurch, dass die Kopplung der Hilfswicklung 18 an den magnetischen Fluss entsprechend ausgebildet ist. Dies führt beim bestimmungsgemäßen Betrieb dazu, dass die durch die Hilfswicklung 18 bereitgestellte Hilfsspannung 20 bei Überschreiten einer vorgegebenen Last, nämlich dem Erreichen eines vorgebbaren maximalen Hilfsstromes 36, zusammenbricht. Eingestellt werden kann der maximale Hilfsstrom 36 beispielsweise durch Anpassen des Innenwiderstands der durch die Hilfswicklung 18 bereitgestellten Hilfsspannungsquelle. Wie im Folgenden noch erläutert werden wird, ergibt sich hieraus die vorteilhafte, automatische Wirkung des erfindungsgemäßen Widerstandsschweißtransformators 12.

In den Diagrammen der Figuren 2 bis 7 ist im Folgenden dargestellt, wie ein Wechsel zwischen der Hauptspannung 16 und der Hilfsspannung 20 gemäß der Erfindung vollzogen wird. Das Verfahren wird mittels eines Widerstandsschweißtransformators 12 der Erfindung durchgeführt. Dieses Ausführungsbeispiel bezieht sich zwar auf Widerstandspunktschweißen, kann aber auch einfach auf andere Formen des Widerstandsschweißens übertragen werden.

In Fig. 2 ist in einem Diagramm mittels eines Graphen der zeitliche Verlauf des relativen Wertes des Schweißwiderstands 32 einer Verbindungsstelle zwischen zwei mittels Widerstandspunktschweißen zu verbindenden Blechen über eine vorgegebene Anzahl von Zeitschritten dargestellt. Die Bleche sind mit einer Oberflächenbeschichtung versehen, sodass Widerstandsschweißen der bekannten Art nicht möglich ist, ohne die Oberfläche entsprechend vorzubereiten. Mit der Erfindung ist eine solche Bearbeitung der Bleche nicht erforderlich, wie die folgenden Ausführungen aufzeigen.

Zu Beginn, im Bereich des Zeitabschnitts 1 bis zum Zeitabschnitt 10, liegt der relative Wert des Schweißwiderstands 32 bei 100%. Durch Einwirkung des erfindungsgemäßen Schweißtransformators 12, beispielsweise gemäß dem Ausführungsbeispiel zur Fig.1, sinkt der relative Wert des Schweißwiderstands 32 in den Zeitschritten 10 bis 20 auf einen Wert deutlich unter 10% ab. Dieser Wert wird für die weiteren Zeitschritte 21 bis 30 im Wesentlichen gehalten. Er ist vorliegend im Wesentlichen durch den Widerstand der verschmelzenden Teile bestimmt.

Der in Fig. 2 dargestellte Verlauf des Schweißwiderstandes 32 wird durch die im Folgenden dargestellten Einwirkungen aufgrund der Erfindung erreicht.

In Fig. 3 ist der Verlauf der Hilfsspannung 20 über dem gleichen Zeitabschnitt wie in Fig. 2 mittels eines Graphen dargestellt. In der vorliegenden Ausgestaltung liegt die Anfangsspannung bis zum Zeitschritt 10 bei etwa 45V. Zu diesem Zeitpunkt kontaktieren die Schweißelektroden 30 die Verbindungsstelle, wobei sich zwischen den Schweißelektroden 30 der Schweißwiderstand 32 ausbildet. Aufgrund der Hilfsspannung 20 ändert der Schweißwiderstand 32 seinen Wert, woraufhin der in Fig. 6 dargestellte Hilfsstrom 36 zu fließen beginnt, wobei die in Fig. 2 dargestellte Reduzierung des Schweißwiderstandes 32 erreicht wird. Der Schweißwiderstand 32 ändert somit seinen Wert von einem hohen Wert (100%), bei welchem eine ordnungsgemäße Verschweißung nicht erreicht werden kann, zu einem Wert (< 10%), der eine ordnungsgemäße Verschweißung erlaubt. Die Hilfsspannung 20 sinkt dabei bis zum Zeitschritt 20 auf die Hauptspannung 16 ab. Die Schweißspannung 38 wechselt also von der Hilfsspannung 20 auf die Hauptspannung 16. Zugleich steigt der Hilfsstrom 36 in der vorliegenden Ausgestaltung von 0 Ampere (A) ab dem Zeitschritt 10 von Null auf 100 A im Zeitschritt 20 an (vgl. Fig. 6). Dies ist auch zugleich der maximale Hilfsstrom, bei dessen Erreichen von der Hilfsspannung 20 auf die Hauptspannung 16 gewechselt wird. Das Erreichen des maximalen Hilfsstromes zeigt an, dass die Verbindungsstelle nun zum ordnungsgemäßen Verschweißen vorbereitet ist.

Der Schweißwiderstand 32 hat nunmehr einen Wert erreicht, bei dem ein ordnungsgemäßes Verschweißen durchgeführt werden kann. Bei Erreichen der Hauptspannung 16 durch die Hilfsspannung 20 setzt aufgrund der Parallelschaltung automatisch der Hauptstrom 34 ein, der sich zum Hilfsstrom 36 hinzuaddiert. Beide Ströme zusammen bilden den Schweißstrom 40 (siehe Fig. 7).

Wie aus Fig. 4 ersichtlich ist, sinkt die Hauptspannung 16, die vorliegend im unbelasteten Zustand bei 9 V (Volt) liegt, aufgrund des Hauptstromes 34 auf eine Arbeitsspannung von 8 V ab. Aufgrund der Parallelschaltung beträgt zu diesem Zeitschritt 20 auch die Hilfsspannung 20 lediglich noch 8 V. Diese Spannung liegt an den Schweißelektroden 30 an und bildet die Schweißspannung 38, deren Verlauf in Fig. 5 dargestellt ist.

Ersichtlich ist, dass im Bereich des Zeitschritts 20 der eigentliche Stromfluss für die ordnungsgemäße Durchführung der Verschweißung erreicht ist. Wie aus Fig. 7 ersichtlich ist, ist der Schweißstrom 40 bis zum Zeitschritt 10 Null. Danach steigt der Schweißstrom 40 bis zum Zeitschritt 21 an( Fig. 7). In den Zeitschritten 10 bis 20 fließt nämlich noch kein Hauptstrom 34, sodass der Schweißstrom 40 einzig durch den Hilfsstrom 36 gebildet ist. Da der Schweißstrom 40 während des eigentlichen Verschweißvorgangs oberhalb der Zeit des Zeitschritts 20 mehrere kA (Kiloampere) beträgt, ist in Fig. 7 lediglich der relative Wert des Schweißstromes 40 dargestellt. Daraus ergibt sich, dass der Wert des Hilfsstromes 36 lediglich einen kleinen Bruchteil des eigentlichen Werts des Schweißstroms 40 während des Schweißvorgangs beträgt. Da sich hier der Schweißstrom 40 aus der Summe des Hilfsstroms 36 und dem Hauptstrom 34 ergibt, ist ersichtlich, dass der Hauptstrom 34 erheblich größer als der Hilfsstrom 36 ist. Erst mit Einsetzen des Hauptstroms 34 beginnt der eigentliche Schweißvorgang.

Darüber hinaus ergibt sich daraus, dass der Leiterquerschnitt des elektrischen Leiters der Hilfswicklung 18 deutlichen kleiner als der Leiterquerschnitt des elektrischen Leiters der Hauptwicklung 14 sein kann. Der durch die Hilfswicklung 18 erforderliche zusätzliche Raumbedarf im Widerstandsschweißtransformator 12 gemäß der Erfindung kann folglich trotz höherer Windungszahl gegenüber der Hauptwicklung 14 klein sein.

Ein Aspekt der Erfindung ist es, dass der vorbeschriebene Wechsel von der Hilfsspannung 20 auf die Hauptspannung 16 automatisch erfolgt und hierfür keine weiteren Mittel erforderlich sind. Der automatische Wechsel erfolgt dadurch, dass durch Reduzierung des Schweißwiderstandes 32 der Hilfsstrom 36 soweit ansteigt, dass aufgrund des Innenwiderstands der durch die Hilfswicklung 18 gebildeten Hilfsspannungsquelle die Hilfsspannung 36 so weit einbricht, bis der Wert der Hauptspannung 16 erreicht ist und ein Stromfluss des Hauptstromes 34 durch die Dioden 22 freigegeben ist. Dadurch wird der Hauptstrom 34 bereitgestellt, sodass eine ordnungsgemäße Verschweißung durchgeführt werden kann. Für diesen Vorgang sind keine weiteren Mittel oder Steuer- beziehungsweise Regelungseinrichtungen erforderlich. Zuvor ist der Stromfluss durch die Dioden 22 verhindert, weil diese in Sperrrichtung spannungsbeaufschlagt sind.

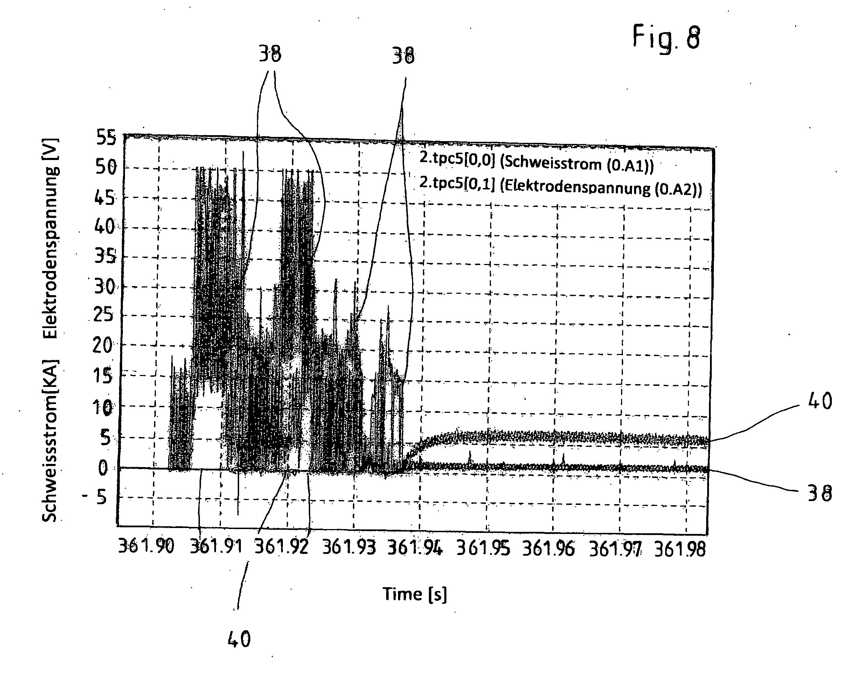

Die Funktion der Erfindung soll anhand eines weiteren Beispiels vertieft werden. Es wird hierzu auf Fig. 8 verwiesen, in der der Verlauf der Schweißspannung 38 sowie des Schweißstroms 40 beim Widerstandspunktschweißen eines nicht dargestellten lackierten Bleches dargestellt ist. Zur Durchführung des in Fig. 8 dargestellten Vorgangs wird eine Widerstandsschweißvorrichtung 10 gemäß der Erfindung verwendet, wie sie anhand der Fig. 1 dargestellt und beschrieben ist. Bezüglich der vorrichtungsseitigen Merkmale wird deshalb auf die Ausführungsform der Fig. 1 verwiesen.

Das dem Verfahren gemäß Fig. 8 zugrundeliegende lackierte Blech ist mit bisherigen Widerstandsschweißeinrichtungen aufgrund der Isolation durch den Lack nicht ohne geeignete Vorbehandlung beziehungsweise besondere Prozessbedingungen schweißbar. Die Erfindung schafft diesbezüglich Abhilfe.

Wie aus dem Diagramm der Fig. 8 ersichtlich ist, wird kurz nach dem Zeitpunkt 361,9 s (Sekunde) der elektrische Kontakt zwischen den Schweißelektroden 30 und dem lackierten Blech hergestellt. Zu erkennen ist dies daran, dass die Schweißspannung 38 auf einen Wert bis etwa 50 V springt. Darauf folgen Spannungssprünge. Es wird somit in Abhängigkeit der Änderung des sich zwischen den Schweißelektroden 30 ausbildenden Schweißwiderstands 32 zwischen der Hauptspannung 16 und der Hilfsspannung 20 hin und her gewechselt. Diese Spannungssprünge bewirken, dass sich der durch das lackierte Blech bereitgestellte Schweißwiderstand 32 an der Verbindungsstelle reduziert. Über etwa weitere 35 Millisekunden (ms) wird die zu verschweißende Verbindungsstelle mit der Hilfsspannung 20 beaufschlagt, wobei eine Vielzahl von Spannungssprüngen stattfinden. Zugleich bleibt der Strom jedoch deutlich unterhalb des Werts des Schweißstromes 40, der in der vorliegenden Ausgestaltung bei ordnungsgemäßer Verschweißung etwa 6 kA beträgt. Während der Spannungssprünge bleibt der Schweißstrom 40 mit etwa 100 A in einem sehr kleinen Bereich, sodass im Wesentlichen noch kein Verschweißungseffekt bewirkt wird. Die Kombination der Hilfsspannung 20 mit dem Hilfsstrom 36 bewirkt eine Reduktion des Schweißwiderstandes 32, sodass nach etwa 35 ms der Schweißwiderstand 32 einen Wert erreicht, der eine zuverlässige ordnungsgemäße Verschweißung erlaubt. Zu diesem Zeitpunkt erreicht die Hilfsspannung 20 die Hauptspannung 16, sodass sich zusätzlich zum Hilfsstrom 36 der Hauptstrom 34 addiert und der Schweißstrom 40 gebildet wird. Es stellt sich der die Verschweißung bewirkende Schweißstrom 40 ein, der etwa ab dem Zeitpunkt 361,94 s einen Wert von etwa 6 kA erreicht und so eine zuverlässige ordnungsgemäße Verschweißung bewirkt. Vorliegend bewirkt die Einwirkung der höheren Hilfsspannung 20 auf die Lackschicht ein elektrisches Durchschlagen an der Verbindungsstelle. Aufgrund des hierdurch reduzierten elektrischen Widerstands beginnt der eigentliche aus Haupt- und Hilfsstrom 34, 36 gebildete Schweißstrom 40 für die ordnungsgemäße Verschweißung zu fließen.

Mit dem erfindungsgemäßen Verfahren wird somit automatisch die Lackierung im Bereich der zu verschweißenden Verbindungsstelle aufgebrochen, sodass ein Schweißwiderstand 32 gebildet wird, dessen Widerstandswert eine ordnungsgemäße Widerstandsverschweißung zulässt. Dabei wirkt die Hilfsspannung 20 nur so lange auf die zu verschweißende Stelle ein, bis sich der erforderliche Widerstandswert einstellt, woraufhin dann automatisch - ohne weiteres Zutun - der eigentliche Schweißvorgang des Widerstandsschweißens beginnt. In gleicher Weise lassen sich natürlich auch andere das Widerstandsschweißen behindernde Oberflächeneigenschaften abbauen, sodass für eine Vielzahl von bisher dem Widerstandsschweißen nicht zugänglichen Anwendungen die Möglichkeit zum direkten Widerstandsschweißen ohne weitere Behandlungen und/oder besonderer Prozessbedingungen geschaffen wird.

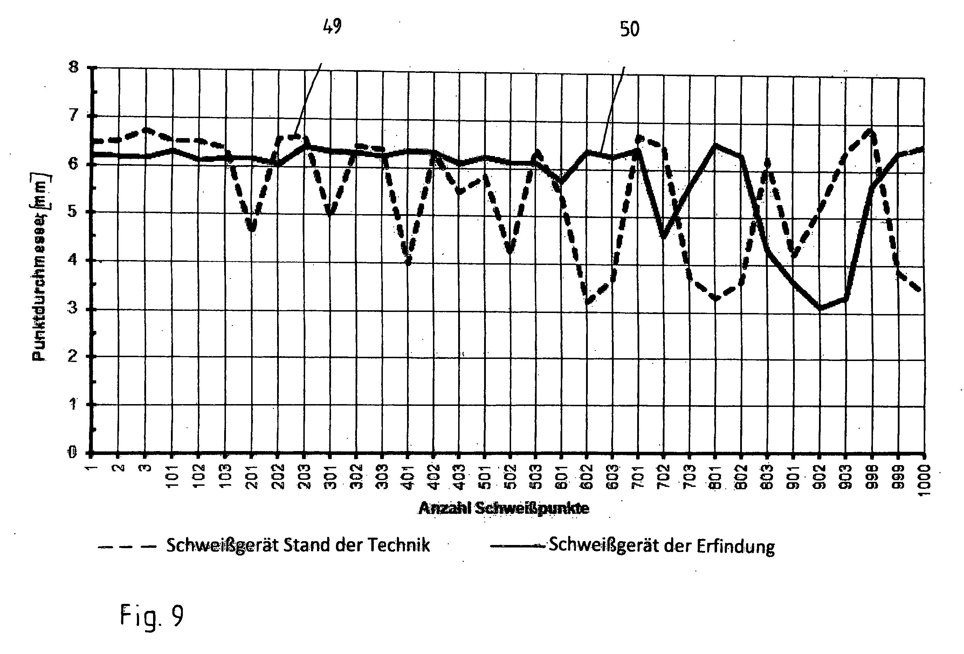

Die Erfindung ermöglicht jedoch auch noch einen weiteren Vorteil, wie er anhand von Fig. 9 ersichtlich ist. In Fig. 9 ist in einem Diagramm dargestellt, wie sich der Punktdurchmesser bei einer Widerstandspunktschweißung mit der Anzahl der Schweißvorgänge eines einzigen Schweißelektrodenpaares 30 ändert. Ein unterbrochener Graph 49 stellt dabei den Punktdurchmesser einer jeweiligen Schweißung mit einem im Stand der Technik üblichen Schweißgerät dar. Ein durchgezogener Graph 50 stellt dagegen den Punktdurchmesser dar, wie er sich bei Einsatz der erfindungsgemäßen Widerstandsschweißvorrichtung 10 und des erfindungsgemäßen Verfahrens ergibt. Der Punktdurchmesser beziehungsweise seine Änderung ist ein Maß für die Qualität der Schweißverbindung. Ist der Durchmesser zu klein, hat die Schweißverbindung nicht die geforderten Eigenschaften. Deshalb ist es wünschenswert, dass sich der Punktdurchmesser bei sich wiederholenden Schweißvorgängen während des bestimmungsgemäßen Betriebs der Widerstandspunktschweißvorrichtung möglichst wenig ändert.

Wie aus Fig. 9 ersichtlich ist, ist bei einem Widerstandspunktschweißgerät des Standes der Technik gemäß Graph 49 der Punktdurchmesser bereits nach 200 Zyklen derart abgesunken, dass eine Nacharbeit der Elektroden 30 erforderlich ist. Der durchgezogene Verlauf gemäß Graph 50 mit einer Widerstandspunktschweißvorrichtung 10 der Erfindung zeigt dagegen, dass derartige Reduzierungen des Punktdurchmessers erst nach etwa 700 Zyklen erreicht werden. Das bedeutet, dass die Standfestigkeit der Elektrodenanordnung durch Einsatz des erfindungsgemäßen Verfahrens beziehungsweise der erfindungsgemäßen Widerstandsschweißvorrichtung um mehr als den Faktor 3 erhöht werden kann. Dadurch können Standzeiten und teure Nachrüstarbeiten reduziert werden.

Die Schwankungen bei den Punktdurchmessern resultieren unter anderem aus Ablagerungen an den Schweißelektroden, wodurch sich der Schweißwiderstand 32 ändert. An dieser Stelle ist sodann eine Nacharbeit oder ein Austausch der Schweißelektroden 30 erforderlich. Durch die Erfindung kann erreicht werden, dass die Schweißqualität erheblich verbessert ist. Das vorliegende Beispiel gemäß Fig. 9 zeigt, dass die gewünschte Schweißqualität über etwa eine dreifache höhere Zyklusanzahl gehalten werden kann.

Die Ausführungsbeispiele dienen lediglich der Erläuterung der Erfindung und sind für diese nicht beschränkend. Die Zahlenangaben bezüglich Spannungen und Ströme beziehen sich auf Effektivwerte, insbesondere bei Wechselspannungen und pulsierenden Gleichspannungen.

**Bezugszeichenliste**

| | | | |
|---|---|---|---|
| 10 | Widerstandsschweißvorrichtung | 40 | Schweißstrom |
| 12 | Widerstandsschweißtransformator | 42 | Primärwicklung |
| 14 | Hauptwicklung | 44 | Anschluß |
| 16 | Hauptspannung | 46 | Anschluß |
| 18 | Hilfswicklung | 48 | Elektrische Leitung |
| 20 | Hilfsspannung | 49 | Graph (Stand der Technik) |
| 22 | Diode | 50 | Graph (Erfindung) |
| 24 | Diode | | |
| 26 | Anzapfung | | |
| 28 | Anzapfung | | |
| 30 | Schweißelektrode | | |
| 32 | Schweißwiderstand | | |
| 34 | Hauptstrom | | |
| 36 | Hilfsstrom | | |
| 38 | Schweißspannung | | |

## Patentansprüche

1. Widerstandsschweißtransformator (12) mit einer ersten als Hauptwicklung (14) dienenden Sekundärwicklung, die eine Hauptspannung (16) erzeugt, und mindestens einer zweiten als Hilfswicklung (18) dienenden Sekundärwicklung, die eine Hilfsspannung (20) erzeugt, wobei die Hilfswicklung (18) eine größere Anzahl Windungen aufweist als die Hauptwicklung (14), so dass die Hilfsspannung (20) größer als die Hauptspannung (16) ist, wobei die Hauptwicklung (14) und die Hilfswicklung (18) ausgleichsfrei parallelgeschaltet sind.

2. Widerstandsschweißtransformator nach Anspruch 1, **dadurch gekennzeichnet, dass** die Hauptspannung (16) 3 bis 16 Volt, bevorzugt 6 bis 12 Volt und besonderes bevorzugt 8 bis 10 Volt beträgt.

3. Widerstandsschweißtransformator nach Anspruch 1 oder 2, dass die Hilfsspannung (20) 50 Volt oder weniger, insbesondere 10 bis 50 Volt, bevorzugt 25 bis 50 Volt und besonders bevorzugt 45 bis 50 Volt beträgt.

4. Widerstandsschweißtransformator nach einem der Ansprüche 1 bis 3, **dadurch gekennzeichnet, dass** die Parallelschaltung der Hauptwicklung (14) und der Hilfswicklung (18) einen Gleichrichter (22, 24) aufweist.

5. Widerstandsschweißtransformator nach einem der Ansprüche 1 bis 4, **gekennzeichnet durch** einen magnetisch permeablen Körper, der eine Unterbrechung, insbesondere einen Luftspalt aufweist.

6. Widerstandsschweißtransformator nach Anspruch 5, **dadurch gekennzeichnet, dass** der magnetisch permeable Körper einen unterschiedlichen magnetischen Fluss für die Hauptwicklung (14) und die Hilfswicklung (18) bereitstellt.

7. Widerstandsschweißtransformator nach einem der Ansprüche 1 bis 6, **dadurch gekennzeichnet, dass** dieser als Dreiphasenschweißtransformator ausgebildet ist.

8. Widerstandsschweißtransformator nach einem der Ansprüche 1 bis 7, **dadurch gekennzeichnet, dass** die Hauptwicklung (14) und die Hilfswicklung (18) einstückig als Reihenschaltung mit Anzapfung ausgebildet sind.

9. Widerstandsschweißtransformator nach einem der Ansprüche 1 bis 8, **dadurch gekennzeichnet, dass** die Hauptwicklung (14) und/oder die Hilfswicklung (18) eine Anzapfung (26, 28) aufweisen.

10. Widerstandsschweißvorrichtung (10) mit Schweißelektroden (30) und einem Widerstandsschweißtransformator (12) nach einem der Ansprüche 1 bis 9, wobei die Schweißelektroden (30) an den Widerstandsschweißtransformator (12) angeschlossen sind.

11. Widerstandsschweißverfahren zum Widerstandsschweißen von Verbindungsstellen mit einem Schweißwiderstand (32), bei dem mittels eines Widerstandsschweißtransformators nach einem der vorhergehenden Ansprüche 1 bis 9 zwischen einer Hauptspannung (16) und einer Hilfsspannung (20) in Abhängigkeit der Änderung eines sich zwischen Schweißelektroden (30) ausbildenden Schweißwiderstandes (32) gewechselt wird, wobei das Widerstandsschweißen in zwei Schritten durchgeführt wird, wobei in einem ersten Schritt die zu schweißende Verbindungsstelle zunächst mit der Hilfsspannung (20) beaufschlagt wird, deren Spannungswert größer als die Hauptspannung (16) ist, und wobei in einem zweiten Schritt eine Beaufschlagung der Verbindungsstelle mit der Hauptspannung (16) erfolgt.

12. Widerstandsschweißverfahren nach Anspruch 11, **dadurch gekennzeichnet, dass** ein Wechsel zwischen der Hauptspannung (16) und der Hilfsspannung (20) automatisch in Abhängigkeit einer Änderung des Widerstandswertes des Schweißwiderstandes (32) erfolgt.

## Claims

1. A resistance welding transformer (12) comprising a first secondary winding serving as main winding (14), which generates a main voltage (16), and at least one second secondary winding serving as auxiliary winding (18), which generates an auxiliary voltage (20), wherein the auxiliary winding (18) comprises a higher number of coils than the main winding (14), such that the auxiliary voltage (20) is higher than the main voltage (16), wherein the main winding (14) and the auxiliary winding (18) are connected in parallel without compensation.

2. A resistance welding transformer according to claim 1, **characterized in that** the main voltage (16) is comprised between 3 and 16 Volt, preferably between 6 and 12 Volt and most preferably between 8 and 10 Volt.

3. A resistance welding transformer according to claim 1 or 2, **characterized in that** the auxiliary voltage (20) is comprised between 50 Volt or less, especially between 10 and 50 Volt, preferably between 25 and 50 Volt and most preferably between 45 and 50 Volt.

4. A resistance welding transformer according to one of the claims 1 through 3, **characterized in that** the parallel connection of the main winding (14) and the auxiliary winding (18) comprises a rectifier (22, 24).

5. A resistance welding transformer according to one of the claims 1 through 4, **characterized by** a magnetically permeable body which comprises an interruption, in particular an air gap.

6. A resistance welding transformer according to claim 5, **characterized in that** the magnetically permeable body provides a different magnetic flux for the main winding (14) and the auxiliary winding (18).

7. A resistance welding transformer according to one of the claims 1 through 6, **characterized in that** this one is designed as a three-phase welding transformer.

8. A resistance welding transformer according to one of the claims 1 through 7, **characterized in that** the main winding (14) and the auxiliary winding (18) are formed in one piece as a series connection with tapping.

9. A resistance welding transformer according to one of the claims 1 through 8, **characterized in that** the main winding (14) and/or the auxiliary winding (18) comprise a tapping (26, 28).

10. A resistance welding device (10) comprising welding electrodes (30) and a resistance welding transformer (12) according to one of the claims 1 through 9, wherein the welding electrodes (30) are connected to the resistance welding transformer (12).

11. A resistance welding method for resistance welding connection points using a welding resistor (32), in which it will be switched between a main voltage (16) and an auxiliary voltage (20) by means of a resistance welding transformer according to one of the preceding claims 1 through 9 and in dependence on the alteration of a welding resistor (32) generated between welding electrodes (30), wherein the resistance welding will be carried out in two steps, wherein in a first step the auxiliary voltage (20), the value of which is higher than the one of the main voltage, will at first be applied to the connection point to be welded, and wherein in a second step the main voltage (16) will be applied to the connection point.

12. A resistance welding method according to claim 11, **characterized in that** a switch between the main voltage (16) and the auxiliary voltage (20) will automatically take place in dependence on a change of the resistance value of the welding resistor (32).

## Revendications

1. Transformateur de soudage par résistance (12) comprenant un premier enroulement secondaire servant comme enroulement principal (14), qui génère une tension principale (16), et au moins un deuxième enroulement secondaire servant comme enroulement auxiliaire (18), qui génère une tension auxiliaire (20), l'enroulement auxiliaire (18) comprenant un nombre plus grand de spires que l'enroulement principal (14), de sorte que la tension auxiliaire (20) est plus grande que la tension principale (16), l'enroulement principal (14) et l'enroulement auxiliaire (18) étant couplés en parallèle sans compensation.

2. Transformateur de soudage par résistance selon la revendication 1, **caractérisé en ce que** la tension principale (16) est comprise entre 3 et 16 Volt, de préférence entre 6 et 12 Volt et de préférence particulière entre 8 et 10 Volt.

3. Transformateur de soudage par résistance selon la revendication 1 ou la revendication 2, **caractérisé en ce que** la tension auxiliaire (20) est comprise entre 50 Volt ou moins, notamment entre 10 et 50 Volt, de préférence entre 25 et 50 Volt et de préférence particulière entre 45 et 50 Volt.

4. Transformateur de soudage par résistance selon l'une des revendications 1 à 3, **caractérisé en ce que** le montage en parallèle de l'enroulement principal (14) et de l'enroulement auxiliaire (18) comprend un redresseur (22, 24).

5. Transformateur de soudage par résistance selon l'une des revendications 1 à 4, **caractérisé par** un corps magnétiquement perméable, qui comprend une interruption, notamment une fente d'air.

6. Transformateur de soudage par résistance selon la revendication 5, **caractérisé en ce que** le corps magnétiquement perméable fournit un flux magnétique différent pour l'enroulement principal (14) et pour l'enroulement auxiliaire (18).

7. Transformateur de soudage par résistance selon l'une des revendications 1 à 6, **caractérisé en ce que** celui-ci est configuré comme transformateur de soudage à trois phases.

8. Transformateur de soudage par résistance selon l'une des revendications 1 à 7, **caractérisé en ce que** l'enroulement principal (14) et l'enroulement auxiliaire (18) sont formés d'un seul tenant comme circuit en série avec une prise.

9. Transformateur de soudage par résistance selon l'une des revendications 1 à 8, **caractérisé en ce que** l'enroulement principal (14) et/ou l'enroulement auxiliaire (18) comprennent une prise (26, 28).

10. Dispositif de soudage par résistance (10) comprenant des électrodes de soudage (30) et un transformateur de soudage par résistance (12) selon l'une des revendications 1 à 9, dans lequel les électrodes de soudage (30) sont raccordés au transformateur de soudage par résistance (12).

11. Procédé se soudage par résistance pour souder par résistance des points de jonction en utilisant un rhéostat de soudage (32), dans lequel on fait alterner, par moyen d'un transformateur de soudage par résistance selon l'une des revendications précédentes 1 à 9, une tension principal (16) et une tension auxiliaire (20) en fonction du changement d'un rhéostat de soudage (32) qui se forme entre des électrodes de soudage (30), le soudage par résistance se faisant en deux étapes, la tension auxiliaire (20), dont la valeur de tension est plus grande que celle de la tension principale (16), étant appliquée au point de jonction dans une première étape et la tension principale (16) étant appliquée au point de jonction dans une deuxième étape.

12. Procédé se soudage par résistance selon la revendication 11, **caractérisé en ce qu'**un changement entre la tension principale (16) et la tension auxiliaire (20) est automatiquement effectué en fonction du changement de la valeur de résistance du rhéostat de soudage (32).
